# FASCICULE DE BREVET EUROPEEN

(11) **EP 2 900 112 B1**
(45) Date de publication et mention de la délivrance du brevet: **12.04.2017**
(21) Numéro de dépôt: 13774749.9
(22) Date de dépôt: 18.09.2013
(51) Int. Cl.: A47J 39/00, A47J 37/06, A47J 37/12

(54) **APPAREIL ELECTRIQUE DOMESTIQUE DE CUISSON A FLUX D'AIR**
ELEKTRISCHE HAUSHALTSKOCHVORRICHTUNG MIT LUFTSTROM
HOUSEHOLD ELECTRICAL AIR FLOW COOKING APPLIANCE

(30) Priorité: 26.09.2012 FR 1259069
(43) Date de publication de la demande: 05.08.2015
(73) Titulaire: SEB S.A., 69130 Ecully (FR)
(72) Inventeur: ALLEMAND, Bernard, 70100 Velesmes Echevanne (FR); PETITALLOT, Johann, 21310 Arceau (FR)
(74) Mandataire: Cémeli, Eric Philippe Laurent
(86) Numéro de dépôt international: PCT/FR2013/052150
(87) Numéro de publication internationale: WO 2014/049231

(56) Documents cités:
- EP-A1- 2 248 452
- WO-A1-87/00261
- US-A- 2 024 062

## Description

La présente invention concerne de manière générale un appareil de cuisson à flux d'air, et en particulier le circuit de ventilation formé au sein d'un tel appareil.

Il est connu dans l'art antérieur des appareils de cuisson à flux d'air, tel que celui décrit dans le document WO 2006/000700 A2. L'appareil décrit comprend des résistances chauffantes et un ventilateur pour créer un flux fermé d'air chaud (en recirculation) dirigé vers des aliments contenus dans une cuve. L'air est aspiré au niveau d'une paroi latérale de la cuve par le ventilateur et circule dans un conduit du couvercle pour être expulsé par une sortie de ventilation en direction des aliments dans la cuve. En contrepartie, ce système présente notamment l'inconvénient de présenter un couvercle compliqué qui forme partiellement la gaine de ventilation. Il faut en effet ajouter des cloisons au couvercle pour former cette gaine de ventilation et prévoir leur ajustement avec l'autre partie de la gaine agencée sur le boîtier fixe. Les tolérances de fabrication doivent tenir compte de cette fonction d'ajustement et les coûts sont impactés, de même que le procédé d'assemblage qui est allongé.

Un but de la présente invention est de répondre aux inconvénients du document de l'art antérieur mentionné ci-dessus et en particulier, tout d'abord, de proposer un appareil de cuisson à flux d'air qui est simple et économique à fabriquer.

Pour cela un premier aspect de l'invention concerne un appareil électrique domestique de cuisson et/ou de réchauffage d'aliments, comprenant
- un boîtier avec une cuve agencée pour recevoir les aliments à cuire et/ou à réchauffer,
- un couvercle amovible agencé pour fermer la cuve pendant la cuisson et/ou le réchauffage,
- au moins un élément chauffant et un ventilateur agencés pour créer un flux fermé d'air chaud pendant la cuisson et/ou le réchauffage,
- une gaine de ventilation comprenant une entrée d'aspiration agencée sur un côté de la cuve, une sortie de ventilation au dessus de la cuve, et agencée pour diriger le flux d'air chaud sur les aliments pendant la cuisson et/ou le réchauffage, caractérisé en ce que la gaine de ventilation est monobloc et indépendante du couvercle.

L'appareil selon la présente invention propose un couvercle simple car la gaine de ventilation n'y est pas intégrée, et comme elle en est indépendante, il n'y a pas d'interaction entre le couvercle et la gaine de ventilation, de sorte que les tolérances de fabrication ne sont pas dictées par ces facteurs. Il est à noter qu'un circuit fermé pour un tel appareil signifie que la majeure partie du flux d'air est en recirculation, mais que des fuites d'air entre le couvercle et le boîtier sont possibles.

Selon un mode de réalisation, le couvercle comprend une poignée de préhension agencée sur une portion supérieure du couvercle, en regard de la gaine de ventilation, et le couvercle présente une double paroi sur la portion supérieure où est agencée la poignée de préhension. Cette mise en oeuvre de l'invention procure une bonne sécurité pour l'utilisateur contre les risques de brûlure, avec la double paroi qui isole la poignée de préhension de la chaleur rayonnée par la gaine de ventilation sur le couvercle.

Selon un mode de réalisation, la sortie de ventilation forme une surface de sortie orientée par rapport à l'horizontale d'un angle compris entre 10° et 80°. Le flux d'air est dirigé sur les aliments directement, sans perte ou remous inutiles avec la sortie de ventilation orientée vers le bas.

Selon un mode de réalisation, l'appareil comprend une paroi entourant la cuve et agencée à une distance prédéterminée de la cuve pour laisser passer le flux d'air projeté sur les aliments vers l'entrée d'aspiration de la gaine de ventilation.

Selon un mode de réalisation, le dit au moins un élément chauffant est agencé dans la gaine de ventilation, en aval du ventilateur. Cette mise en oeuvre procure un sous ensemble gaine de ventilation-élément chauffant pouvant être fourni directement assemblé sur la ligne principale de montage.

Selon un mode de réalisation, le ventilateur est un ventilateur centrifuge qui comprend une roue à aubes agencée latéralement à la cuve, et la gaine de ventilation est agencée au dessus de la roue à aubes.

Selon un mode de réalisation, la gaine de ventilation est métallique.

Selon un mode de réalisation, l'appareil comprend un moyen de brassage pour enduire automatiquement lesdits aliments d'une pellicule de matière grasse par brassage desdits aliments avec de la matière grasse.

Selon un mode de réalisation, le moyen de brassage comprend au moins une pale agencée dans la cuve et tournant autour d'un axe de rotation.

Selon un mode de réalisation, l'appareil forme une friteuse à cuisson sèche.

Un aspect de l'invention concerne un appareil électrique domestique de cuisson d'aliments comprenant :
- un boîtier avec un réceptacle agencé pour recevoir les aliments à cuire,
- un couvercle amovible agencé pour fermer le réceptacle pendant la cuisson,
- au moins un interrupteur de sécurité agencé dans le boîtier pour ouvrir au moins un circuit électrique de l'appareil lorsque le couvercle ne ferme pas le réceptacle, et pour fermer ledit au moins un circuit électrique lorsque le couvercle ferme le réceptacle,
- une came agencée dans le boîtier, avec au moins une surface de commande agencée pour actionner une touche de commande dudit au moins un interrupteur de sécurité selon une direction d'enfoncement de la touche de commande,
caractérisé en ce que le couvercle comprend un doigt de commande agencé pour actionner une surface d'entrée de la came selon une direction de déplacement de la surface d'entrée différente de la direction d'enfoncement :
- pendant l'ouverture du réceptacle pour ouvrir ledit au moins un circuit électrique,
- pendant la fermeture du réceptacle pour fermer ledit au moins un circuit électrique.

L'appareil selon la présente invention offre une bonne sécurité d'utilisation avec le circuit ouvert si le couvercle ne ferme pas le réceptacle et ne nécessite pas d'installer une portion du circuit électrique sur le couvercle, car c'est le doigt du couvercle qui actionne la came du boîtier pour ouvrir/fermer le circuit électrique. En d'autres termes, le couvercle ne comprend que l'organe de commande mécanique (le doigt) pour agir sur le circuit électrique du boîtier qui est distinct du couvercle. D'autre part, la présente invention offre la possibilité d'utiliser des interrupteurs de sécurité simplifiés, car la sollicitation de la touche de commande se fait dans sa direction d'enfoncement. Il n'y a pas besoin de prévoir des interrupteurs prévus pour résister à des efforts sur la touche de commande exercés dans une autre direction que celle d'enfoncement. Ce dernier type d'interrupteur (pouvant résister à un effort d'actionnement à 45° de la direction d'enfoncement par exemple) est plus onéreux que le type d'interrupteur requis par l'invention (dont l'effort d'actionnement est parallèle à la direction d'enfoncement de la touche). De plus, avec une direction de déplacement de la surface d'entrée différente de la direction d'enfoncement de la touche de commande, le concepteur de l'appareil bénéficie de plus de libertés pour implanter l'interrupteur, il n'est plus lié à la direction de déplacement de la surface d'entrée.

Selon un aspect de l'invention, le doigt de commande est agencé pour être inséré dans et sorti de l'appareil pendant la fermeture et l'ouverture du réceptacle selon une direction d'insertion et de sortie perpendiculaire à la direction de déplacement de la surface d'entrée. C'est la came, sur sa surface d'entrée, qui supporte l'effort exercé par le doigt dans une direction différente de celle du mouvement de la surface d'entrée.

Selon un aspect de l'invention, le doigt de commande présente une épaisseur prédéterminée et le déplacement de la surface d'entrée de la came selon la direction de déplacement de la surface d'entrée pour ouvrir ou fermer le circuit électrique est égal à l'épaisseur prédéterminée du doigt de commande. La course de la surface d'entrée de la came détermine la course de la surface de commande et donc la commande de l'interrupteur. Selon ce mode de réalisation, ces courses sont déterminées par l'épaisseur du doigt de commande, il en résulte que la précision de la course ne dépend que de l'épaisseur du doigt, ce qui facilite le contrôle des variabilités lors de la production en série.

Selon un aspect de l'invention, l'appareil comporte une butée fixe de guidage agencée de sorte que le doigt de commande coulisse entre la surface d'entrée de la came et la butée fixe de guidage lors de son insertion et de sa sortie de l'appareil. Le guidage est amélioré, et la butée fixe de guidage reprend les efforts exercés par la came sur le doigt, de sorte que la structure du doigt peut être simplifiée.

Selon un aspect de l'invention, le circuit électrique présente une phase et un neutre, l'appareil comprend un interrupteur de sécurité pour la phase et un interrupteur de sécurité pour le neutre, et la came comprend une surface de commande séparée pour chaque interrupteur de sécurité. Cette mise en oeuvre sécurise le circuit de phase et le circuit de neutre et offre la possibilité de déporter les deux interrupteurs l'un de l'autre.

Selon un aspect de l'invention, l'appareil comprend un axe de rotation, la came est agencée pour pivoter autour de l'axe de rotation, et les interrupteurs de sécurité et les surfaces de commande respectives de la came sont déportés angulairement et agencés dans un même plan. Cette mise en oeuvre améliore la compacité de l'appareil.

Selon un aspect de l'invention, l'appareil comprend un élément élastique agencé pour exercer sur la came une force constante qui tend à ouvrir ledit au moins un circuit électrique. Le rappel de la came en position d'ouverture du circuit électrique garantit la sécurité d'utilisation en ramenant systématiquement la came en position d'ouverture du circuit électrique. D'une manière avantageuse, le ou les interrupteur(s) de sécurité comprend(nent) lui(eux)-même(s) cet élément élastique qui assure un retour en position ouverte du circuit électrique.

Selon un aspect de l'invention, le circuit électrique est un circuit de chauffage et/ou un circuit d'alimentation d'un moteur d'entraînement en rotation d'un outil rotatif disposé dans le réceptacle.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

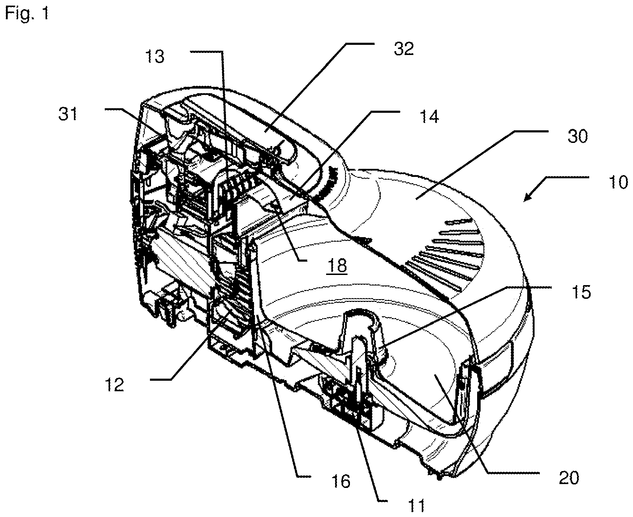

- la figure 1 représente une coupe d'une vue en perspective d'un appareil selon la présente invention.

Conformément à l'invention, l'appareil est un appareil domestique c'est-à-dire spécifiquement conçu et dimensionné pour un usage domestique, par exemple dans le cadre familial. A ce titre, l'appareil peut être manipulé à la main par son utilisateur, par exemple pour être déplacé d'un placard à un plan de travail. En d'autres termes, l'appareil présente préférentiellement un caractère portable

L'appareil conforme à l'invention est préférentiellement conçu et dimensionné pour cuire et/ou chauffer des aliments particulaires tels que des morceaux de pommes de terre.

Le concept général de l'appareil selon l'invention autorise une grande polyvalence en matière de modes de cuisson, de sorte que le terme cuire employé ici recouvre différents modes de traitement des aliments, comme par exemple la friture, le rissolage, le rôtissage, ou le brunissage.

Dans une variante préférentielle de réalisation, qui correspond aux exemples illustrés aux figures, l'appareil conforme à l'invention est préférentiellement conçu et dimensionné pour assurer un traitement thermique des aliments destinés à leur conférer des qualités gustatives sensiblement équivalentes ou proches à celles d'aliments frits, et notamment d'aliments frits dans un bain d'huile. Dans cette variante, l'appareil conforme à l'invention constitue donc une friteuse, et plus particulièrement une friteuse à cuisson sèche. Par cuisson sèche, on désigne ici un mode de cuisson d'aliments sans immersion de ces derniers dans un bain d'huile ou de matière grasse, que cette immersion soit partielle et/ou temporaire pendant le cycle de cuisson.

L'expression cuisson sèche désigne au contraire une cuisson dans laquelle les aliments sont certes mouillés par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile, puisqu'il permet en particulier de réunir des conditions propres à l'établissement d'une réaction de Maillard suffisante pour conférer aux aliments le caractère doré et craquant propre aux aliments frits sans que lesdits aliments n'aient pour autant été plongés complètement et directement dans un bain d'huile brûlante.

La figure 1 représente un appareil de cuisson et/ou de réchauffage d'aliments selon la présente invention, avec un boitier 10 et un couvercle 30.

Le boîtier 10 contient une cuve 20 fixe et agencée pour recevoir les aliments à cuire et/ou à réchauffer dans laquelle est agencé un moyen de brassage 15 tel qu'une pale tournante autour d'un axe de rotation et entraînée en rotation par un moteur 11, pour brasser les aliments et les enduire d'une couche de matière grasse.

Afin de chauffer et/ou cuire les aliments disposés dans la cuve 20, le boîtier 10 comprend également un ventilateur et un élément chauffant 13 formé par exemple par une résistance agencés pour créer un flux fermé d'air chaud qui sera dirigé sur les aliments dans la cuve 20 pour les cuire et/ou réchauffer. Le circuit de ventilation comprend une roue à aubes 12 du ventilateur qui est agencée pour aspirer à travers une grille 16 de l'air qui est situé autour de la cuve 20, et l'envoyer vers la résistance chauffante 13, elle-même agencée dans une gaine de ventilation 14. Cette dernière comporte une sortie de ventilation 18 au dessus de la cuve 20 orientée vers le bas, pour diriger le flux d'air expulsé vers les aliments contenus dans la cuve 20.

Le couvercle 30 est amovible par rapport au boîtier 10, c'est-à-dire qu'il peut être complètement retiré de ce dernier pour disposer les aliments dans le réceptacle ou pour les retirer de ce dernier. Afin d'être ergonomique, le couvercle 30 comprend une poignée de préhension 32 permettant une manipulation aisée. D'autre part, un doigt de commande 31 est prévu sur le couvercle pour actionner au moins un interrupteur de sécurité du boîtier lors de l'ouverture et de la fermeture, pour ouvrir et fermer un circuit électrique de l'appareil. Enfin, une double paroi est ménagée sur le couvercle 30 à l'endroit où la poignée 32 est fixée. En effet, la gaine de ventilation 14 est en regard de l'endroit où la poignée 32 est fixée sur le couvercle, et la double paroi limite la conduction à la poignée 32 de la chaleur rayonnée par la gaine de ventilation 14 sur la face interne du couvercle 30. Il n'y a pas de risque de brûlure pour l'utilisateur s'il saisit la poignée 32 même en cours de cuisson.

La sortie de ventilation 18 agencée au dessus de la cuve 20 est orientée vers le bas pour diriger le flux d'air chaud directement sur les aliments contenus dans la cuve 20. La sortie 18 forme une surface qui est orientée par rapport à un plan horizontal d'un angle compris entre 10° et 80°. Proche de la borne inférieure de cette plage, l'angle de la sortie 18 impliquera un jet descendant directement sur la partie de la cuve 20 située sous la sortie 18, proche de la borne supérieure de la plage mentionnée, l'angle de la sortie 18 déterminera un flux d'air chaud qui baignera plutôt la partie de cuve opposée à la sortie 18 par rapport au centre de la cuve 20.

Le ventilateur et sa roue à aubes 12 sont fixés sur un élément du boîtier 10, et la gaine de ventilation 14 est également montée sur l'élément du boîtier pour recueillir l'air aspiré par la roue à aubes 12 et envoyé vers le haut par cette dernière. Le montage est simple.

La gaine de ventilation 14 est indépendante du couvercle 30 et ce dernier ne comporte aucun élément de canalisation d'air, ce qui simplifie sa conception. De plus, la gaine de ventilation 14 indépendante du couvercle 30 se fixe exclusivement sur le boîtier 10, ce qui permet éventuellement de réaliser un sous ensemble indépendant composé de la gaine de ventilation 14 et des résistances chauffantes 13, ce sous ensemble pouvant être réalisé à part et fourni directement sur la chaîne de montage finale de l'appareil selon l'invention.

Enfin, la gaine de ventilation 14 est agencée pour ne pas gêner la manipulation de la cuve de cuisson 20. En d'autre termes, la gaine de ventilation 14 est dimensionnée pour mettre en place ou retirer la cuve 20 de l'appareil en l'inclinant légèrement.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil électrique domestique de cuisson et/ou de réchauffage d'aliments, comprenant
- un boîtier (10) avec une cuve (20) agencée pour recevoir les aliments à cuire et/ou à réchauffer,
- un couvercle amovible (30) agencé pour fermer la cuve (20) pendant la cuisson et/ou le réchauffage,
- au moins un élément chauffant (13) et un ventilateur agencés pour créer un flux fermé d'air chaud pendant la cuisson et/ou le réchauffage,
- une gaine de ventilation (14) comprenant une entrée d'aspiration agencée sur un côté de la cuve (20), une sortie de ventilation (18) au dessus de la cuve (20), et agencée pour diriger le flux d'air chaud sur les aliments pendant la cuisson et/ou le réchauffage, **caractérisé en ce que** la gaine de ventilation (14) est monobloc et indépendante du couvercle (30).

2. Appareil selon la revendication 1, **caractérisé en ce que** le couvercle (30) comprend une poignée de préhension (32) agencée sur une portion supérieure du couvercle (30), en regard de la gaine de ventilation (14), et **en ce que** le couvercle (30) présente une double paroi sur la portion supérieure où est agencée la poignée de préhension (32).

3. Appareil selon l'une des revendications 1 ou 2, **caractérisé en ce que** la sortie de ventilation (18) forme une surface de sortie orientée par rapport à l'horizontale d'un angle compris entre 10° et 80°.

4. Appareil selon l'une des revendications 1 à 3, **caractérisé en ce qu'**il comprend une paroi entourant la cuve (20) et agencée à une distance prédéterminée de la cuve (20) pour laisser passer le flux d'air projeté sur les aliments vers l'entrée d'aspiration de la gaine de ventilation (14).

5. Appareil selon l'une des revendications 1 à 4, **caractérisé en ce que** le dit au moins un élément chauffant (13) est agencé dans la gaine de ventilation (14), en aval du ventilateur.

6. Appareil selon l'une des revendications 1 à 5, **caractérisé en ce que** le ventilateur est un ventilateur centrifuge qui comprend une roue à aubes (12) agencée latéralement à la cuve (20), et **en ce que** la gaine de ventilation (14) est agencée au dessus de la roue à aubes (12).

7. Appareil selon l'une des revendications 1 à 6, **caractérisé en ce que** la gaine de ventilation (14) est métallique.

8. Appareil selon l'une des revendications 1 à 7, **caractérisé en ce qu'**il comprend un moyen de brassage (15) pour enduire automatiquement lesdits aliments d'une pellicule de matière grasse par brassage desdits aliments avec de la matière grasse.

9. Appareil selon la revendication 8, **caractérisé en ce que** le moyen de brassage (15) comprend au moins une pale agencée dans la cuve (20) et tournant autour d'un axe de rotation.

10. Appareil selon l'une des revendications 1 à 9, **caractérisé en ce qu'**il forme une friteuse à cuisson sèche.

## Patentansprüche

1. Elektrohaushaltsgerät zum Garen und/oder Aufwärmen von Nahrungsmitteln, das Folgendes umfasst:
- - ein Gehäuse (10) mit einem Behälter (20), der für die Aufnahme der zu garenden und/oder aufzuwärmenden Nahrungsmittel ausgelegt ist,
- - einen abnehmbaren Deckel (30), der für das Verschließen des Behälters (20) während des Garens und/oder Aufwärmens ausgelegt ist,
- - zumindest ein Heizelement (13) und ein Gebläse, die für die Erzeugung einer geschlossenen Strömung heißer Luft während des Garens und/oder Aufwärmens ausgelegt sind,
- - einen Lüftungskanal (14), der eine Ansaugöffnung an einer Seite des Behälters (20) und einen Lüftungsausgang (18) über dem Behälter (20) umfasst und so angeordnet ist, dass er die Strömung heißer Luft während des Garens und/oder Aufwärmens zu den Nahrungsmitteln lenkt, **dadurch gekennzeichnet, dass** der Lüftungskanal (14) einteilig und unabhängig vom Deckel (30) ist.

2. Gerät nach Anspruch 1, **dadurch gekennzeichnet, dass** der Deckel (30) einen Handgriff (32) umfasst, der an einem oberen Teilstück des Deckels (30) gegenüber dem Lüftungskanal (14) angeordnet ist, und dass der Deckel (30) am oberen Teilstück, an dem der Handgriff (32) angeordnet ist, eine doppelte Wand aufweist.

3. Gerät nach einem der Ansprüche 1 oder 2, **dadurch gekennzeichnet, dass** der Lüftungsausgang (18) eine Ausgangsfläche bildet, die in Bezug auf die Horizontale in einem Winkel von 10° bis 80°ausgerichtet ist.

4. Gerät nach einem der Ansprüche 1 bis 3, **dadurch gekennzeichnet, dass** es eine Wand umfasst, die den Behälter (20) umschließt und mit einem vorbestimmten Abstand zum Behälter (20) angeordnet ist, um die auf die Nahrungsmittel gerichtete Luft zum Ansaugeingang des Lüftungskanals (14) strömen zu lassen.

5. Gerät nach einem der Ansprüche 1 bis 4, **dadurch gekennzeichnet, dass** zumindest ein Heizelement (13) in dem Lüftungskanal (14) dem Gebläse vorgeordnet ist.

6. Gerät nach einem der Ansprüche 1 bis 5, **dadurch gekennzeichnet, dass** das Gebläse ein Zentrifugalgebläse ist, das ein Schaufelrad (12) umfasst, das seitlich am Behälter (20) angeordnet ist, und dass der Lüftungskanal (14) über dem Schaufelrad (12) angeordnet ist.

7. Gerät nach einem der Ansprüche 1 bis 6, **dadurch gekennzeichnet, dass** der Lüftungskanal (14) aus Metall besteht.

8. Gerät nach einem der Ansprüche 1 bis 7, **dadurch gekennzeichnet, dass** es eine Rührvorrichtung (15) umfasst, um die Nahrungsmittel durch Vermischen der Nahrungsmittel mit Fett automatisch mit einem Fettfilm zu umhüllen.

9. Gerät nach Anspruch 8, **dadurch gekennzeichnet, dass** die Rührvorrichtung (15) zumindest ein in dem Behälter (20) angeordnetes und sich um eine Drehachse drehendes Rührelement umfasst.

10. Gerät nach einem der Ansprüche 1 bis 9, **dadurch gekennzeichnet, dass** es eine Fritteuse mit trockener Garmethode bildet.

## Claims

1. Household electrical appliance for cooking and/or reheating food, comprising
- a housing (10) with a container (20) arranged such as to receive food to be cooked and/or reheated,
- a removable lid (30) arranged such as to close the container (20) while cooking and/or reheating,
- at least one heating element (13) and a fan arranged such as to create a closed hot air flow while cooking and/or reheating,
- a ventilation sheath (14) comprising a suction inlet arranged on one side of the container (20), a ventilation outlet (18) above the container (20) and arranged such as to direct the hot air flow onto the food while cooking and/or reheating, **characterized in that** the ventilation sheath (14) is in one piece and separated from the lid (30).

2. Appliance according to claim 1 **characterized in that** the lid (30) comprises a handle (32) arranged on an upper portion of the lid (30), opposite the ventilation sheath (14), and **in that** the lid (30) has a double wall on the upper portion on which the handle (32) is arranged.

3. Appliance according to claim 1 or claim 2, **characterized in that** the ventilation outlet (18) forms an outlet surface oriented at an angle between 10° and 80° with the horizontal.

4. Appliance according to one of claims 1 to 3, **characterized in that** it comprises a wall surrounding the container (20) and arranged at a predefined distance from the container (20) for allowing the air flow projected onto the food to advance towards the suction inlet of the ventilation sheath (14).

5. Appliance according to one of claims 1 to 4, **characterized in that** said at least one heating element (13) is arranged in the ventilation sheath (14), downstream of the fan.

6. Appliance according to one of claims 1 to 5, **characterized in that** the fan is a centrifugal fan which comprises an impeller (12) arranged laterally to the container (20), and **in that** the ventilation sheath (14) is arranged above the impeller (12).

7. Appliance according to one of claims 1 to 6, **characterized in that** the ventilation sheath (14) is metal.

8. Appliance according to one of claims 1 to 7, **characterized in that** it comprises a stirring means (15) for automatically coating said food with a film of fat by stirring said food together with fat.

9. Appliance according to claim 8, **characterized in that** the stirring means (15) comprises at least one blade arranged in the container (20) and turning about an axis of rotation.

10. Appliance according to one of claims 1 to 9, **characterized in that** it forms a dry fryer.
